# FASCICULE DE BREVET EUROPEEN

(11) **EP 2 683 647 B1**
(45) Date de publication et mention de la délivrance du brevet: **14.01.2015**
(21) Numéro de dépôt: 12713219.9
(22) Date de dépôt: 09.03.2012
(51) Int. Cl.: B67B 7/00, G01N 35/00, G01N 35/02, G01N 27/62, G01N 1/28

(54) **STATION DE DESOPERCULAGE SELECTIF DE CARTES GEL**
STATION ZUM SELEKTIVEN ENTDECKELN VON GELKARTEN
STATION FOR THE SELECTIVE UNCAPPING OF GEL CARDS

(30) Priorité: 10.03.2011 FR 1151973
(43) Date de publication de la demande: 15.01.2014
(73) Titulaire: Bio-Rad Innovations, 92430 Marnes-La-Coquette (FR); Noviloire, 42300 Roanne (FR)
(72) Inventeur: BERNAY, Sébastien, F-42670 Ecoche (FR); BRISEBRAT, Jean-Michel, F-42460 Villers (FR); BUFFIERE, Frédéric, F-33600 Pessac (FR)
(74) Mandataire: Besnard, Christophe Laurent
(86) Numéro de dépôt international: PCT/FR2012/050505
(87) Numéro de publication internationale: WO 2012/120246

(56) Documents cités:
- WO-A1-2006/094388
- WO-A1-2010/007709
- WO-A2-2010/116069
- US-A1- 2007 172 393

## Description

### DOMAINE DE L'INVENTION

La présente invention concerne le domaine des appareils pour réaliser des analyses biologiques ou médicales.

### ARRIERE PLAN DE L'INVENTION

Traditionnellement, de tels appareils, également appelés automates d'analyses, permettent d'automatiser certains protocoles, comme par exemple la distribution de liquides dans des cartes gel. Ce protocole consiste à verser une quantité de liquide prédéterminée à l'aide d'un dispositif de distribution de liquides dans un puits réactionnel d'une carte gel contenant généralement un ou plusieurs réactifs. Ce liquide peut par exemple être un échantillon sanguin, ou tout autre type de prélèvement humain.

De manière connue, une carte gel est un réceptacle comportant un corps dans lequel sont ménagés un ou plusieurs puits réactionnels dans lesquels se déroulent des réactions biologiques.

Traditionnellement, les puits de la carte gel sont initialement obturés par un opercule qui est scellé au corps. Le plus souvent, cet opercule est constitué d'une bande mince en aluminium.

Généralement, l'opération de distribution de liquides dans des puits réactionnels est réalisée en perçant l'opercule à l'aide d'un dispositif de distribution de liquides muni d'une aiguille afin d'ouvrir un ou plusieurs puits. Ensuite, le liquide est déversé dans le ou les puits à l'aide de cette même aiguille.

Un inconvénient est que la répétition de l'opération de perçage de l'opercule métallique abîme la pointe des aiguilles. Ces dernières doivent donc être régulièrement démontées et changées, ce qui présente un coût non négligeable et nécessite en outre d'arrêter l'automate.

Un autre inconvénient apparaît lors de l'utilisation de cartes gel ayant des puits réactionnels non identiques, c'est-à-dire contenant des réactifs différents. Dans ce cas, il est généralement nécessaire de laver les aiguilles entre chaque distribution de liquide afin d'éviter la contamination entre les puits de cette carte gel. En traversant l'opercule afin d'ouvrir un premier puits contenant un premier réactif, l'aiguille peut être souillée par des gouttelettes de premier réactif pouvant être accrochées à une face intérieure de l'opercule. Si l'aiguille n'est pas rincée, elle risque de transporter le premier réactif dans un deuxième puits contenant un deuxième réactif différent du premier réactif, et de causer la contamination du deuxième réactif.

Une station de désoperculage d'un réceptacle selon le préambule de la revendication 1 est divulguée dans le US 2007/0172393.

### OBJET ET RESUME DE L'INVENTION

Un but de la présente invention est de remédier à ces inconvénients en proposant une solution pour ouvrir les puits sans percer l'opercule.

La présente invention porte donc sur une station de désoperculage d'un réceptacle comportant un corps dans lequel sont formés plusieurs puits adjacents initialement scellés par un opercule. De préférence, les puits adjacents sont initialement thermoscellés par un opercule. Dans ce cas, l'opercule est de préférence thermocollé au réceptacle. Il peut être aussi simplement collé au réceptacle.

On précise que cette station de désoperculage est avant tout, mais pas nécessairement, destinée à être utilisée avec un automate d'analyses, les réceptacles étant alors de préférence des cartes gel.

Selon l'invention, la station de désoperculage selon l'invention comporte :
- au moins un organe de découpe pour réaliser au moins une découpe dans l'opercule entre deux puits adjacents, de manière à former au moins une portion d'opercule obturant au moins l'un des puits du réceptacle, le puits sélectionné ;
- au moins un dispositif de préhension chauffant qui est arrangé pour chauffer et retirer ladite portion d'opercule, grâce à quoi on ouvre le puits sélectionné.

On comprend que par « puits sélectionné » on entend le puits qui est obturé par la portion d'opercule qui va être retirée par le dispositif de préhension chauffant.

Après l'ouverture du puits sélectionné, l'aiguille du dispositif de distribution de liquides y est introduite afin de déverser le liquide dans le puits. Ainsi l'invention permet-elle de s'affranchir de l'étape de perçage de l'opercule, ce qui permet d'éviter l'endommagement de l'extrémité de l'aiguille du dispositif de distribution de liquides. En outre, dans la mesure où la portion d'opercule a été retirée, on évite le risque de contamination précité, grâce à quoi l'opération de lavage entre chaque distribution de liquide peut être avantageusement supprimée ou à tout le moins être réalisée de manière moins fréquente.

On précise qu'au sens de l'invention, la découpe peut être réalisée sur tout ou partie de la largeur de l'opercule, et sur tout ou partie de l'épaisseur de l'opercule, la découpe devant être suffisante pour permettre au dispositif de préhension de retirer la portion d'opercule. De préférence, la découpe sera réalisée sur toute l'épaisseur et toute la largeur de l'opercule de manière à isoler la portion d'opercule du reste de l'opercule.

Généralement, le corps du réceptacle est en plastique et l'opercule est scellé au corps par le biais d'un film de thermoscellage ou d'une colle.

On comprend donc que la chaleur dégagée par le dispositif de préhension permet de décoller ou dessouder la portion d'opercule initialement scellée au corps du réceptacle, notamment lorsque la portion d'opercule est initialement thermoscellée, thermocollée ou encore simplement collée au corps du réceptacle, en faisant fondre le film de thermoscellage ou la colle disposée entre l'opercule et le corps du réceptacle. Après l'étape de chauffage, ou concomitamment, le dispositif de préhension retire la portion de l'opercule hors du corps, par exemple en la pelant.

Le dispositif de préhension chauffant permet de faire fondre ce film de thermoscellage ou cette colle, par exemple en appliquant une température de l'ordre de 200°C pendant une durée suffisante pour atteindre la fusion.

Le transfert thermique entre le dispositif de préhension chauffant et le matériau plastique est assuré grâce aux propriétés conductrices du matériau constitutif de l'opercule qui est de préférence métallique.

Après le retrait de la portion d'opercule par le dispositif de préhension, le puits sélectionné qui était initialement obturé par ladite portion d'opercule, est ouvert. Par ailleurs, le reste de l'opercule reste thermoscellé au corps du réceptacle en obturant les puits non sélectionnés.

De préférence, le dispositif de préhension vient au contact de l'opercule tout en exerçant une pression prédéterminée sur celui-ci pendant une durée prédéterminée, de manière à assurer une bonne homogénéité du transfert thermique.

Par suite, on comprend qu'un intérêt majeur de l'invention est de permettre l'ouverture sélective d'un ou plusieurs puits, à savoir les puits réactionnels que l'on souhaite utiliser (les puits sélectionnés), les autres puits restant avantageusement obturés en vue d'une réutilisation future du réceptacle, et ce afin d'éviter le dessèchement des puits réactionnels ouverts mais non destinés à être utilisés.

En outre, l'invention permet d'ouvrir un ou plusieurs puits qui ne sont pas nécessairement adjacents.

De préférence, mais pas nécessairement, les puits du réceptacle sont alignés selon une unique rangée.

On comprend que l'ouverture d'un puits d'extrémité, c'est-à-dire l'un des deux qui sont situés aux deux extrémités de la rangée, nécessite une seule découpe réalisée entre ledit puits d'extrémité et le puits qui lui est adjacent. En revanche, l'ouverture d'un puits sélectionné disposé entre les deux puits d'extrémité nécessite la réalisation de deux découpes réalisées entre ledit puits sélectionné et chacun des deux puits adjacents au puits sélectionné.

Avantageusement, la station selon l'invention comporte une pluralité d'organes de découpe, chacun des organes de découpe étant apte à réaliser une découpe dans l'opercule entre deux puits adjacents de manière à former une ou plusieurs portions d'opercule obturant un ou plusieurs puits. De préférence, on forme autant de portions d'opercule qu'il existe de puits. Cependant, les moyens de découpe peuvent être arrangés pour former un nombre de portions d'opercule correspondant au nombre de puits sélectionnés.

Un intérêt est de pouvoir réaliser simultanément plusieurs portions d'opercule, grâce à quoi on améliore la vitesse d'exécution de l'opération de désoperculage.

Par exemple, si le réceptacle est une carte gel comportant six puits, alors on peut former simultanément six portions d'opercule à l'aide de cinq organes de découpe constitués par exemple de cinq lames ou scies.

De manière avantageuse, la station selon l'invention comporte une pluralité de dispositifs de préhension qui sont déplaçables indépendamment les uns des autres, chacun des dispositifs de préhension présentant une position de repos dans laquelle ledit dispositif de préhension est chauffé par un dispositif de chauffage, et une position de travail dans laquelle ledit dispositif de préhension chauffé est amené en appui contre la ou l'une des portions d'opercule.

Ainsi l'invention permet-elle de retirer en une seule fois plusieurs portions d'opercule, c'est-à-dire d'ouvrir en une seule opération plusieurs puits sélectionnés, qui ne sont pas nécessairement adjacents.

De préférence, mais pas exclusivement, il est prévu autant de dispositifs de préhension qu'il existe de puits dans le réceptacle.

En outre, la station comporte de manière avantageuse un mécanisme de sélection pour sélectionner le ou les dispositifs de préhension devant être déplacés vers la position de travail, et un dispositif de déplacement pour déplacer le ou les dispositifs de préhension sélectionnés vers la position de travail.

Selon un mode de réalisation préféré, le mécanisme de sélection est arrangé de manière à ne pas autoriser le déplacement des dispositifs de préhension associés aux puits qui ne sont pas sélectionnés, c'est-à-dire qui ne sont pas destinés à être ouverts.

Par exemple, le dispositif de déplacement comporte une platine, chaque dispositif de préhension est fixé à la platine par le biais d'un ressort destiné à exercer une force de pression sur le dispositif de préhension dirigée vers le corps du réceptacle, et le mécanisme de sélection est arrangé pour empêcher le déplacement, par exemple vertical, des dispositifs de préhension qui ne sont pas sélectionnés.

De manière avantageuse, le dispositif de chauffage comporte une sole chauffante fixe et, en position de repos, chaque dispositif de préhension est en contact avec ladite sole chauffante.

On comprend donc que chaque dispositif de préhension chauffant est chauffé par la sole chauffante lorsque ledit dispositif est en position de repos. Un intérêt est de maintenir les dispositifs de préhension à une température suffisante pour permettre le décollement des portions d'opercule, notamment les dispositifs de préhension qui ne seraient pas utilisés pendant plusieurs séquences d'ouverture de puits.

Un tel arrangement permet notamment d'éviter les temps morts résultant du temps de chauffe des dispositifs de préhension non utilisés et améliore ainsi l'efficacité de la station de désoperculage.

De manière préférentielle, chaque dispositif de préhension comprend des moyens pour agripper l'une des portions d'opercule, et la station comporte en outre au moins un organe d'évacuation pour expulser ladite portion d'opercule agrippée par le dispositif de préhension. Un intérêt de ces moyens est d'éviter les bavures résultant de la fusion du matériau thermoplastique de soudage, lesquelles sont susceptibles de former des fils plastiques reliés à la portion d'opercule qui seraient de nouveau solidifiés lors du retrait de ladite portion d'opercule.

On comprend donc que les moyens pour agripper l'une des portions d'opercule permettent de faciliter le retrait de ladite portion d'opercule. Grâce auxdits moyens, il est possible d'effectuer un retrait vertical lors de la remontée du dispositif de préhension ou bien de faciliter l'opération de retrait par pelage via un déplacement transversal du réceptacle par rapport aux dispositifs de préhension.

De préférence, l'organe d'évacuation comporte une tige, préférentiellement fixe, autour de laquelle coulisse le dispositif de préhension, ladite tige étant arrangée pour expulser la portion d'opercule lorsque le dispositif de préhension est ramené en position de repos. Une autre fonction de la tige est de guider le déplacement du dispositif de préhension.

Ainsi, lorsque le dispositif de préhension est en position de travail, la tige est de préférence logée dans le dispositif de préhension de manière à ne pas toucher la portion d'opercule. En revanche, après l'opération de retrait de l'opercule, lorsque le dispositif de préhension est ramené en position de repos, ce dernier emporte généralement avec lui la portion d'opercule. La tige fait alors saillie hors du dispositif de préhension de manière à dégager la portion d'opercule.

Selon un autre aspect de l'invention, la station de désoperculage comporte en outre des moyens pour vérifier si le puits sélectionné a été correctement ouvert.

Pour ce faire, il est prévu des capteurs, tels des capteurs optiques, de préférence un par puits.

En outre, la station comporte un ioniseur pour ioniser le ou les puits sélectionné(s) après son (leur) ouverture. L'ionisation des puits permet d'éliminer les charges électrostatiques contenues dans les puits qui sont généralement la cause de l'apparition de gouttelettes de liquide sur la surface intérieure des puits.

L'invention porte également sur une installation d'analyse d'échantillons biologiques comportant une station de désoperculage selon l'invention qui est destinée à désoperculer des cartes gel comportant des puits réactifs.

La présente invention concerne aussi un procédé de désoperculage d'un réceptacle comportant un corps dans lequel sont formés plusieurs puits adjacents initialement scellés par un opercule, dans lequel :
- on réalise au moins une découpe dans l'opercule entre deux puits adjacents de manière à former au moins une portion d'opercule obturant au moins l'un des puits, le puits sélectionné ;
- on chauffe la portion d'opercule de manière à la décoller du corps ;
- on retire la portion d'opercule de manière à l'évacuer du corps, grâce à quoi on ouvre ledit puits sélectionné.

Ce procédé est avantageusement mis en oeuvre grâce à la station de désoperculage selon l'invention.

Avantageusement, selon le procédé :
- on forme plusieurs portions d'opercule dans l'opercule, lesdites portions d'opercule obturant certains des puits, les puits sélectionnés.
- on chauffe lesdites portions d'opercule de manière à les décoller du corps,
- on retire lesdites portions d'opercule de manière à les évacuer du corps, grâce à quoi on ouvre les puits sélectionnés.

De préférence, après l'opération de désoperculage, on ionise les puits sélectionnés après les avoir ouverts, puis, encore de préférence, on contrôle que les puits sélectionnés sont correctement ouverts.

### BREVE DESCRIPTION DES DESSINS

L'invention sera mieux comprise et ses avantages apparaîtront mieux à la lecture de la description détaillée qui suit, d'un mode de réalisation représenté à titre d'exemple non limitatif. La description se réfère aux dessins, sur lesquels :
- la figure 1 montre un exemple de réceptacle, à savoir une carte gel vierge comportant six puits réactionnels alignés selon une unique rangée, destinée à être utilisée avec la station de désoperculage selon l'invention ;
- la figure 2 est une vue en perspective d'une station de désoperculage selon l'invention, et illustre l'étape au cours de laquelle l'opercule de la carte gel de la figure 1 est découpé ;
- la figure 3 illustre la station de désoperculage de la figure 2, après l'opération de découpe de l'opercule, à l'issue de laquelle six portions d'opercule ont été formées ;
- la figure 4 illustre la station de désoperculage de la figure 3, après l'opération de formation des portions d'opercule, trois dispositifs de préhension étant amenés en position de travail afin de chauffer les trois portions d'opercules couvrant les trois puits sélectionnés;
- la figure 5 illustre l'ouverture des trois puits sélectionnés ;
- la figure 6 illustre la remontée des trois dispositifs de préhension et l'évacuation des trois portions d'opercule ;
- la figure 7 illustre l'étape au cours de laquelle on contrôle que les puits sélectionnés ont été correctement ouverts ;
- la figure 8 est une vue en coupe de l'un des dispositifs de préhension en position de repos ;
- la figure 9 est une vue en coupe de l'un des dispositifs de préhension en position de travail ; et
- la figure 10 est une vue en coupe de l'un des dispositifs de préhension dont le déplacement n'a pas été autorisé par le mécanisme de sélection.

### DESCRIPTION DETAILLEE D'EXEMPLE(S) DE REALISATION

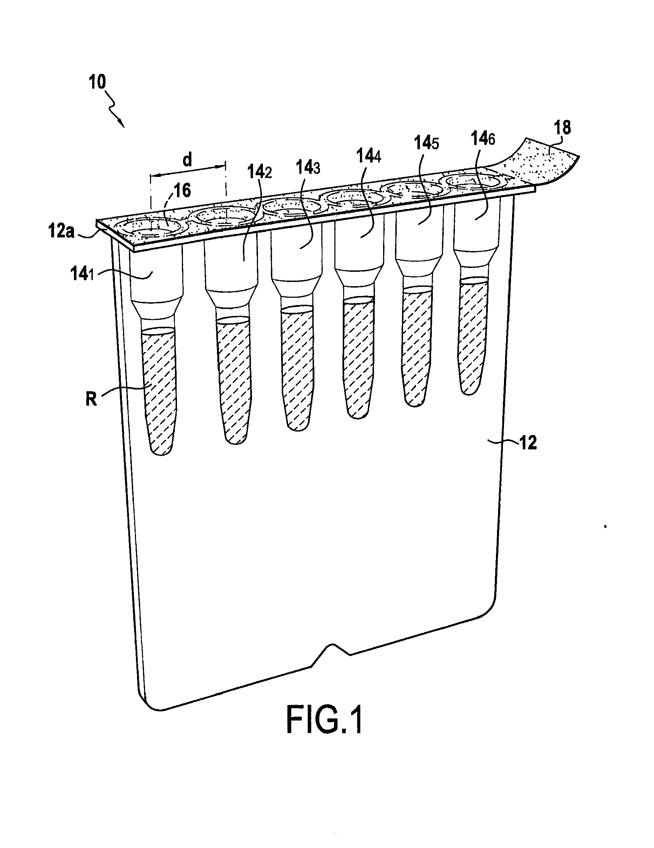

Le réceptacle 10 représenté sur la figure 1 comporte un corps 12 en plastique dans lequel sont formés plusieurs puits 14 réactionnels, en l'espèce six puits référencés 14₁, 14₂, 14₃, 14₄, 14₅, 14₆, qui sont adjacents et disposés selon une rangée unique. Chacun des puits contient un réactif R qui peut être identique ou différent du réactif contenu dans le puits voisin. Un tel réceptacle est bien connu et porte généralement le nom de « carte gel ».

En se référant à la figure 1, on constate que les puits 14 débouchent dans une paroi supérieure 12a de la carte gel. Ces puits 14 présentent donc des ouvertures 16 formées dans la paroi supérieure 12a de la carte gel, ces ouvertures 16 étant initialement obturées par un opercule 18. Dans cet exemple, l'opercule 18 consiste en une bande mince en aluminium qui est thermoscellée à la paroi supérieure 12a du corps 12 de la carte gel 10, par exemple à l'aide d'un film de thermoscellage ou d'une colle. La distance inter puits d correspond à la distance entre les axes de symétrie de deux puits adjacents.

Comme on le voit sur cette figure 1, l'épaisseur de la carte gel 10 est sensiblement inférieure à ses deux autres dimensions.

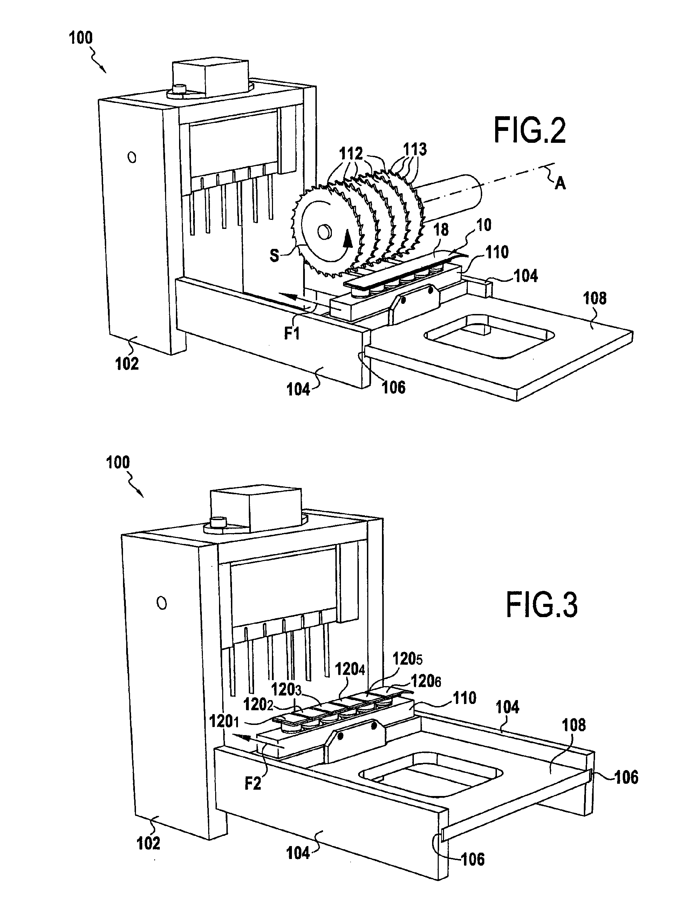

A l'aide des figures 2 à 7, on va décrire une station 100 de désoperculage selon l'invention qui est destinée à ouvrir un ou plusieurs des puits 14 de la carte gel 10 précédemment décrite. On décrira également un procédé de désoperculage, également conforme à l'invention, mis en oeuvre par la station 100.

Dans cet exemple, la station de désoperculage 100 comporte un bâti 102 d'où s'étendent deux bras horizontaux 104. Chacun de ces deux bras est pourvu d'une rainure longitudinale 106, les deux rainures 106 étant destinées à recevoir les bords d'un plateau d'amenée 108. En se référant aux figures 2 et 3, on comprend que le plateau d'amenée 108 peut coulisser dans un plan horizontal tout en étant guidé en translation par les rainures 106.

La figure 2 correspond à un instant où, la carte gel 10, vierge, ayant été préalablement introduite dans le logement 110, on commence à déplacer horizontalement le plateau 108 vers le bâti 102, selon le sens symbolisé par la flèche F1.

L'une des extrémités du plateau d'amenée 108 comprend un logement 110 destiné à recevoir un réceptacle, et notamment la carte gel 10 de la figure 1. Plus précisément, la carte gel 10 est positionnée dans le logement 110 de telle manière que la paroi supérieure 12a ainsi que l'opercule 18 émergent au dessus du plan horizontal du plateau d'amenée 108.

Par ailleurs, la station de désoperculage 100 comporte une pluralité d'organes de découpe 112 qui sont en l'espèce constitués de cinq petites scies circulaires 112 munies de dents coupantes 113. Les scies 112 sont coaxiales et équidistantes. Elles sont montées rotatives autour d'un axe A horizontal et orthogonal au sens de déplacement F1 du plateau 108.

Chacune des scies 112 est positionnée axialement (par rapport à l'axe A) dans un plan vertical passant entre deux puits adjacents de la carte gel. La distance axiale entre deux scies adjacentes est sensiblement égale à la distance inter-puits d. En outre, comme on le voit sur la figure 2, les scies sont disposées au-dessus de la carte gel.

Chacune de ces cinq scies 112 est destinée à réaliser une découpe dans l'opercule 18 de la carte gel 10 entre deux puits adjacents, lors du déplacement du plateau 108 vers le bâti 102. Comme on le voit mieux sur la figure 3, les scies 112 permettent donc de former simultanément six portions d'opercules 120₁,120₂,120₃,120₄,120₅,120₆ séparées les unes des autres, chacune de ces portions d'opercule couvrant un des puits 14 de la carte gel 10.

En outre, afin d'éviter un risque de repoussage de la matière constitutive de l'opercule, ce qui tendrait à rigidifier l'opercule, il est préférable de découper l'opercule en soulevant la matière. Pour ce faire, le sens de rotation S des scies est de préférence inverse par rapport au sens de déplacement F1 du plateau 108 vers le bâti 102.

De préférence, les scies sont positionnées de telle sorte que les extrémités des dents coupantes 113 viennent au contact de la paroi supérieure 12a en plastique du corps des cartes gel 10. Pour éviter la formation de copeaux de plastique, les dents présentent avantageusement des extrémités en forme de pointes.

Après l'opération de découpe, comme cela est illustré sur la figure 3, le plateau 108 est déplacé selon le sens référencé F2 de manière à positionner la carte gel 10 dans le bâti 102.

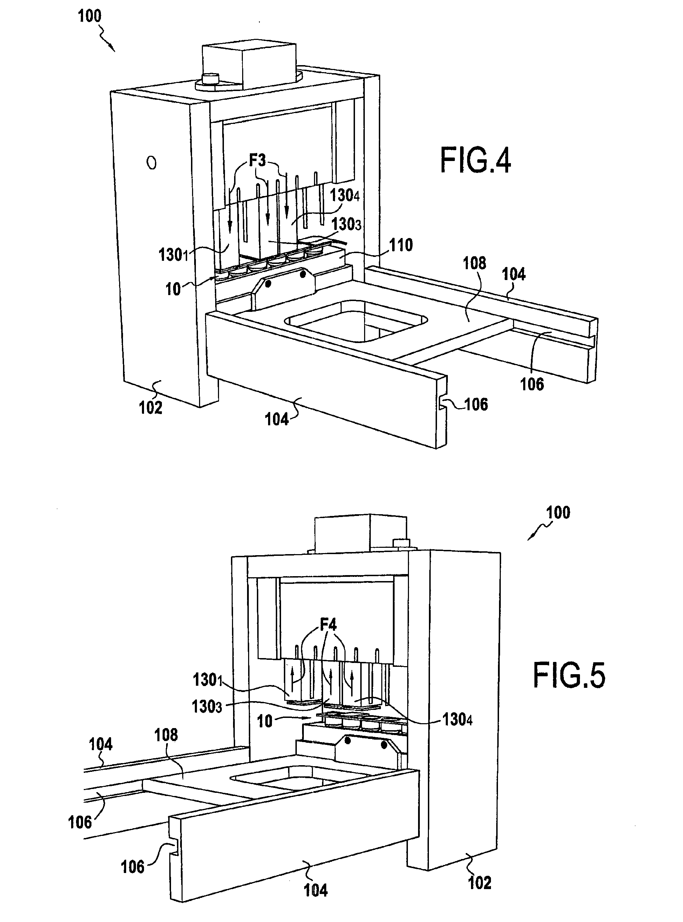

A l'aide des figures 4 et 5, on va maintenant décrire la façon dont est réalisée l'opération de désoperculage.

Dans cet exemple, on décide d'ouvrir les puits 14₁,14₃ et 14₄. Ce choix est tout à fait arbitraire et, bien évidemment, on pourra choisir d'ouvrir un seul puits ou une toute autre combinaison de puits.

Les puits 14₁,14₃ et 14₄ que l'on souhaite ouvrir sont dénommés les puits sélectionnés. Ces puits sélectionnés 14₁,14₃ et 14₄ sont donc obturés par les portions d'opercule référencées 120₁, 120₃ et 120₄.

Conformément à l'invention, la station de désoperculage 100 comporte une pluralité de dispositifs de préhension chauffant 130, chacun de ces dispositifs étant arrangé pour être apte à chauffer et retirer une portion d'opercule.

Dans cet exemple, les dispositifs de préhension chauffants présentent la forme de plots qui sont déplaçables verticalement, indépendamment les uns des autres, mais pas nécessairement simultanément. En l'espèce, la station comporte six plots qui sont disposés en regard de chacun des puits 14 de la carte gel 10, et donc en regard de chacune des portions d'opercule.

Chaque plot 130 présente une position de repos, ainsi qu'une position de travail dans laquelle ledit plot est amené en appui contre une portion d'opercule, c'est-à-dire ici en appui contre la paroi supérieure 12a du corps 12 de la carte gel 10.

Comme on le verra ci-dessous, les plots sont préalablement chauffés avant d'être amenés en position de travail.

Sur l'exemple de la figure 4, les plots chauffants 130₁, 130₃ et 130₄, sont déplacés verticalement selon la flèche F3 pour être amenés en appui respectivement contre les portions d'opercule 120₁, 120₃ et 120₄.

La chaleur dégagée par les plots chauffants 130₁, 130₃ et 130₄ fait fondre le film de thermoscellage ou la colle disposée entre les portions d'opercule et la paroi supérieure 12a du corps de la carte gel, à la suite de quoi les portions d'opercule 120₁, 120₃ et 120₄ se décollent de la carte gel. On a ainsi ouvert (désoperculé) les puits sélectionnés 14₁,14₃ et 14₄.

Dans cet exemple, le retrait des portions d'opercule se fait en ramenant les plots chauffants 130₁, 130₃ et 130₄ vers leur position de repos, autrement dit en les déplaçant verticalement selon le sens symbolisé par la flèche F4 (opposé à la flèche F3) de la figure 5. Il a été constaté que les portions d'opercule sont emportées par les plots lors de la remontée de ceux-ci. Toutefois, il est préférable, mais pas indispensable, de munir les plots chauffants de moyens 134 pour agripper les portions d'opercule, ces moyens pouvant se présenter par exemple sous la forme de petites griffes ou pointes 134.

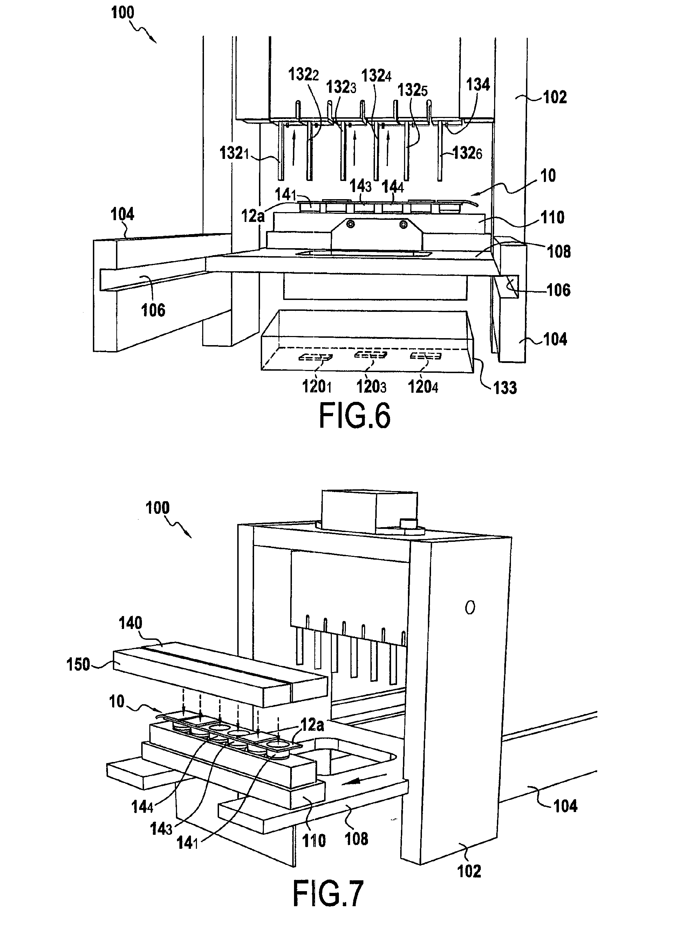

Après l'opération de désoperculage, il est souhaitable d'évacuer les portions d'opercule 120₁, 120₃ et 120₄ qui ont pu rester accrochées aux plots chauffants 130₁, 130₃ et 130₄. Pour ce faire, la station selon l'invention comporte plusieurs organes d'évacuation pour expulser les portions d'opercule agrippées par le plot chauffant. En l'espèce, la station comporte six organes d'évacuation constitués par six tiges référencées 132₁, 132₂, 132₃, 132₄, 132₅ et 132₆. Ces tiges sont fixées au bâti 102 et sont disposées de telle sorte que les dispositifs de préhension (les plots) coulissent autour desdites tiges. Comme on le comprend à l'aide des figures 4 et 6, les tiges sont entièrement logées dans les plots chauffants lorsque ces derniers sont dans leur position de travail, et font saillie lorsque les plots chauffants sont ramenés en position de repos. Ainsi, lors de la remontée des plots chauffants 130₁, 130₃ et 130₄, les tiges 132₁, 132₃ et 132₄ expulsent les portions d'opercule 120₁, 120₃ et 120₄ qui, dans cet exemple, tombent ensuite dans un bac de récupération 133.

Après l'opération de désoperculage, le plateau 108 est déplacé de manière à amener la carte gel 10 à proximité de moyens 140 pour vérifier si les puits sélectionnés 14₁, 14₃ et 14₄ ont été correctement ouverts. Dans cet exemple, ces moyens sont constitués par un ensemble de capteurs optiques qui sont arrangés pour être disposés au dessus de la paroi supérieure. Ces capteurs sont aptes à détecter l'absence des portions d'opercule métalliques et donc l'ouverture des puits sélectionnés. On pourrait toutefois prévoir des moyens de vérification non optiques.

En outre, la station comporte au moins un ioniseur 150 pour ioniser les puits sélectionnés, après leur ouverture, afin d'éliminer les charges électrostatiques susceptibles d'être contenues dans les puits.

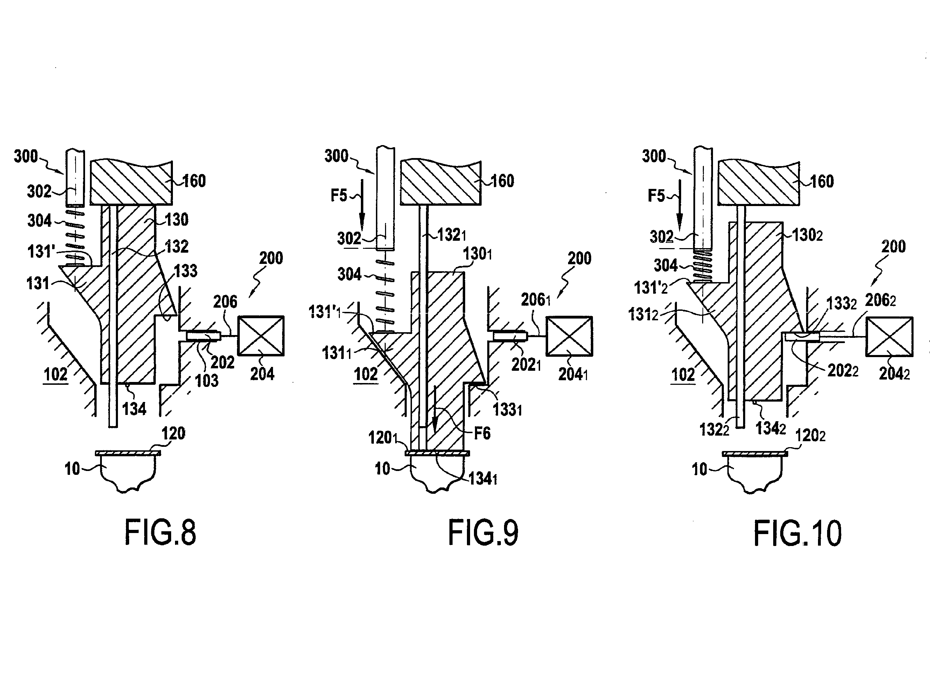

En se référant maintenant aux figures 8 à 10, on va décrire un mode de réalisation du mécanisme de sélection 200 selon l'invention qui permet de sélectionner les dispositifs de préhension (plots) 130 devant être déplacés vers leur position de travail, ainsi que le dispositif de déplacement 300 permettant de déplacer les dispositifs de préhension (plots) 130 entre leur position de repos et leur position de travail.

La figure 8 montre l'un des plots chauffants 130 en position de repos, selon une vue prise dans un plan de coupe vertical et parallèle à la direction de déplacement du plateau 108.

En position de repos, le plot chauffant 130 est au contact d'une sole chauffante 160 qui est fixée au bâti 102. Cette sole chauffante comporte par exemple des résistances électriques permettant de la maintenir à une température sensiblement constante.

Dans cet exemple, le plot chauffant 130 ne comporte donc pas de moyens de chauffage internes. En d'autres termes, le plot chauffant 130 capte l'énergie thermique lorsqu'il est en position de repos.

La sole chauffante 160 est configurée de telle manière que le plot chauffant puisse être amené rapidement à une température de l'ordre de 200°C. Pour ce faire, le plot chauffant sera réalisé de manière préférentielle dans un matériau du type bronze, ou tout autre matériau qui soit bon conducteur tout en présentant un bon coefficient de frottement.

Comme on l'a déjà mentionné ci-dessus, le plot chauffant 130 (130₁, 130₂) est monté coulissant autour de la tige 132 (132₁, 132₂), cette dernière étant fixée au bâti 102.

Le plot 132 est déplacé verticalement grâce au dispositif de déplacement 300 qui comporte une platine 302 déplaçable verticalement dont l'extrémité inférieure porte un ressort de compression 304. Ce dernier exerce une pression contre une surface d'appui horizontale 131' (131'₁, 131'₂) appartenant à une extension radiale 131 (131₁, 131₂) du plot chauffant 130.

Lorsque l'axe vertical 302 est déplacé verticalement vers la carte gel, ce qui est symbolisé par la flèche F5 sur la figure 9, le ressort 304 exerce une pression sur la surface d'appui 131' ce qui a pour conséquence de déplacer verticalement le plot vers la carte gel 10, selon le sens indiqué par la flèche F6, afin de l'amener dans sa position de travail dans laquelle il est en contact avec la portion d'opercule 120.

Le mécanisme de sélection comporte quant à lui plusieurs doigts 202 (202₁, 202₂) qui sont mobiles transversalement par rapport à la direction de déplacement des plots 130, entre une position rétractée et une position déployée. Plus précisément, dans cet exemple, il est prévu autant de doigts mobiles que de plots chauffants.

On voit sur les figures 8 à 10 que le déplacement des doigts 202 (202₁, 202₂), en l'espèce une translation horizontale, est opéré grâce à un électroaimant 204 (204₁, 204₂) relié au doigt par le biais d'une tige 206 (206₁, 206₂).

Le plot 130 comporte quant à lui une surface de butée 133 (133₁, 133₂) horizontale destinée à coopérer avec le doigt 202 (202₁, 202₂) lorsque ce dernier est dans sa position déployée, comme cela est visible sur la figure 10.

Ainsi, lorsque le doigt est en position rétractée, comme cela est le cas sur la figure 9, le plot 130₁, qui est alors un plot sélectionné, peut être amené en position de travail par le déplacement vertical de la platine 302, le doigt 202₁ ne s'opposant pas au déplacement dudit plot.

En revanche, lorsque le doigt 202₂ est en position déployée, comme cela est le cas sur la figure 10, la surface de butée 133₂ du plot 130₂ vient au contact du doigt 202₂ lors du déplacement de la platine 302. Cela a pour conséquence de bloquer le déplacement du plot 130₂, qui n'est donc pas sélectionné, et par suite de l'empêcher d'être amené en position de travail.

Dans l'exemple des figures 8 à 10, le déplacement de la platine 302 provoque le déplacement simultané de tous les plots lors de l'opération de désoperculage. Toutefois, seuls les plots pour lesquels le doigt associé est en position rétractée (les plots sélectionnés) sont amenés en position de travail. Autrement dit, on comprend que le mécanisme de sélection permet d'empêcher le déplacement des plots qui ne sont pas sélectionnés.

On comprend donc que l'invention permet une ouverture sélective des puits de la carte gel, et ce de manière automatique.

## Revendications

1. Station de désoperculage (100) d'un réceptacle (10) comportant un corps (12) dans lequel sont formés plusieurs puits (14) adjacents initialement scellés par un opercule (18), **caractérisée en ce qu'**elle comporte :
- au moins un organe de découpe (112) pour réaliser au moins une découpe dans l'opercule entre deux puits adjacents, de manière à former au moins une portion d'opercule (120₁, 120₂, 120₃, 120₄, 120₅, 120₆) obturant au moins l'un des puits du réceptacle, le puits sélectionné ;
- au moins un dispositif de préhension (130, 130₁, 130₂, 130₃, 130₄, 130₅, 130₆) chauffant qui est arrangé pour chauffer et retirer ladite portion d'opercule, grâce à quoi on ouvre le puits sélectionné.

2. Station selon la revendication 1, **caractérisée en ce qu'**elle comporte une pluralité d'organes de découpe (112), chacun des organes de découpe étant apte à réaliser une découpe dans l'opercule entre deux puits adjacents de manière à former une ou plusieurs portions d'opercule (1201, 1202, 1203, 1204, 1205, 1206) obturant un ou plusieurs puits.

3. Station selon la revendication 1 ou 2, **caractérisée en ce qu'**elle comporte une pluralité de dispositifs de préhension (130, 1301, 1302, 1303, 1304, 1305, 1306) qui sont déplaçables indépendamment les uns des autres, chacun des dispositifs de préhension présentant une position de repos dans laquelle ledit dispositif de préhension est chauffé par un dispositif de chauffage (160), et une position de travail dans laquelle ledit dispositif de préhension chauffé est amené en appui contre la ou l'une des portions d'opercule (1201, 1202, 1203, 1204, 1205, 1206).

4. Station selon la revendication 3, **caractérisée en ce qu'**elle comporte en outre un mécanisme de sélection (200) pour sélectionner le ou les dispositifs de préhension devant être déplacés vers la position de travail, et un dispositif de déplacement (300) pour déplacer le ou les dispositifs de préhension sélectionnés vers la position de travail.

5. Station selon la revendication 4, **caractérisée en ce que** le dispositif de déplacement (300) comporte une platine (302), **en ce que** chaque dispositif de préhension est fixé à la platine par le biais d'un ressort (304) destiné à exercer une force de pression sur le dispositif de préhension (130, 1301, 1302, 1303, 1304, 1305, 1306) dirigée vers le corps du réceptacle, et **en ce que** le mécanisme de sélection est arrangé pour empêcher le déplacement des dispositifs de préhension qui ne sont pas sélectionnés.

6. Station selon l'une quelconque des revendications 3 à 5, **caractérisée en ce que** le dispositif de chauffage comporte une sole chauffante (160) fixe, et **en ce qu'**en position de repos, chaque dispositif de préhension (130, 1301, 1302, 1303, 1304, 1305, 1306) est en contact avec ladite sole chauffante.

7. Station selon l'une quelconque des revendications 3 à 6, **caractérisée en ce que** chaque dispositif de préhension comprend des moyens (134) pour agripper l'une des portions d'opercule, et **en ce que** la station comporte en outre au moins un organe d'évacuation (132) pour expulser ladite portion d'opercule agrippée par le dispositif de préhension.

8. Station selon la revendication 7, **caractérisée en ce que** l'organe d'évacuation comporte une tige (132) autour de laquelle coulisse le dispositif de préhension, ladite tige étant arrangée pour expulser la portion d'opercule lorsque le dispositif de préhension est ramené en position de repos.

9. Station selon l'une quelconque des revendications 1 à 8, **caractérisée en ce qu'**elle comporte en outre des moyens (140) pour vérifier si le puits sélectionné a été correctement ouvert.

10. Station selon l'une quelconque des revendications 1 à 9, **caractérisée en ce qu'**elle comporte en outre un ioniseur (150) pour ioniser le puits sélectionné après son ouverture.

11. Installation d'analyse d'échantillons biologiques comportant une station de désoperculage (100) selon l'une quelconque des revendications 1 à 10 destinée à désoperculer des cartes gel (10) comportant des puits réactifs (14).

12. Procédé de désoperculage d'un réceptacle comportant un corps dans lequel sont formés plusieurs de puits adjacents initialement scellés par un opercule, dans lequel :
- on réalise au moins une découpe dans l'opercule entre deux puits adjacents de manière à former au moins une portion d'opercule obturant au moins l'un des puits, le puits sélectionné ;
- on chauffe la portion d'opercule de manière à la décoller du corps ;
- on retire la portion d'opercule de manière à l'évacuer du corps, grâce à quoi on ouvre ledit puits sélectionné.

13. Procédé selon la revendication 12, dans lequel :
- on forme plusieurs portions d'opercule dans l'opercule, lesdites portions d'opercule obturant certains des puits, les puits sélectionnés.
- on chauffe lesdites portions d'opercule de manière à les décoller du corps,
- on retire lesdites portions d'opercule de manière à les évacuer du corps, grâce à quoi on ouvre les puits sélectionnés.

14. Procédé selon la revendication 12 ou 13, dans lequel on ionise les puits sélectionnés après les avoir ouverts.

15. Procédé selon l'une quelconque des revendications 12 à 14, dans lequel on contrôle que les puits sélectionnés sont correctement ouverts.

## Patentansprüche

1. Station zum Folienabziehen (100) von einem Behälter (10), umfassend einen Körper (12), in dem mehrere anfänglich aneinandergrenzende Vertiefungen (14), die durch eine Folie (18) versiegelt sind, ausgebildet sind, **dadurch gekennzeichnet, dass** sie umfasst:
- mindestens ein Schneidelement (112), um mindestens einen Einschnitt in der Folie zwischen zwei aneinandergrenzenden Vertiefungen herzustellen, um mindestens einen Folienabschnitt (120₁, 120₂, 120₃, 120₄, 120₅, 120₆) zu bilden, der mindestens eine der Vertiefungen des Behälters, die ausgewählte Vertiefung, verschließt,
- mindestens eine wärmende Greifeinrichtung (130, 130₁, 130₂, 130₃, 130₄, 130₅, 130₆), die derart angeordnet ist, dass sie den Folienabschnitt erwärmt und abzieht, wodurch die ausgewählte Vertiefung geöffnet wird.

2. Station nach Anspruch 1, **dadurch gekennzeichnet, dass** sie eine Vielzahl von Schneidelementen (112) umfasst, wobei jedes der Schneidelemente geeignet ist, einen Einschnitt in der Folie zwischen zwei aneinandergrenzenden Vertiefungen herzustellen, um einen oder mehrere Folienabschnitte (120₁, 120₂, 120₃, 120₄, 120₅, 120₆) zu bilden, der eine oder mehrere Vertiefungen verschließt.

3. Station nach Anspruch 1 oder 2, **dadurch gekennzeichnet, dass** sie eine Vielzahl von Greifeinrichtungen (130, 130₁, 130₂, 130₃, 130₄, 130₅, 130₆) umfasst, die unabhängig voneinander verschiebbar sind, wobei jede der Greifeinrichtungen eine Ruhestellung, in der die Greifeinrichtung durch eine Heizvorrichtung (160) erwärmt wird, und eine Arbeitsstellung aufweist, in der die erwärmte Greifeinrichtung an den oder die Folienabschnitte (120₁, 120₂, 120₃, 120₄, 120₅, 120₆) angelegt wird.

4. Station nach Anspruch 3, **dadurch gekennzeichnet, dass** sie ferner einen Auswahlmechanismus (200), um die Greifeinrichtung(en) auszuwählen, die in die Arbeitsstellung gebracht werden sollen, und eine Verschiebeeinrichtung (300) umfasst, um die ausgewählte(n) Greifeinrichtung(en) in die Arbeitsstellung zu verschieben.

5. Station nach Anspruch 4, **dadurch gekennzeichnet, dass** die Verschiebeeinrichtung (300) eine Platte (302) umfasst, dass jede Greifeinrichtung an der Platte durch eine Feder (304) befestigt ist, die dazu bestimmt ist, eine Druckkraft auf die Greifeinrichtung (130, 130₁, 130₂, 130₃, 130₄, 130₅, 130₆) auszuüben, die zum Körper des Behälters gerichtet ist, und dass der Auswahlmechanismus derart angeordnet ist, dass er die Verschiebung der Greifeinrichtungen, die nicht ausgewählt sind, verhindert.

6. Station nach einem der Ansprüche 3 bis 5, **dadurch gekennzeichnet, dass** die Heizvorrichtung einen festen Heizboden (160) umfasst, und dass in Ruhestellung jede Greifeinrichtung (130, 130₁, 130₂, 130₃, 130₄, 130₅, 130₆) mit dem Heizboden in Kontakt ist.

7. Station nach einem der Ansprüche 3 bis 6, **dadurch gekennzeichnet, dass** jede Greifeinrichtung Mittel (134) umfasst, um einen der Folienabschnitte zu befestigen, und dass die Station ferner mindestens ein Ausstoßelement (132) umfasst, um den befestigten Folienabschnitt durch die Greifeinrichtung auszustoßen.

8. Station nach Anspruch 7, **dadurch gekennzeichnet, dass** das Ausstoßelement eine Stange (132) umfasst, um die die Gleitvorrichtung gleitet, wobei die Stange derart vorgesehen ist, dass sie den Folienabschnitt ausstößt, wenn die Greifeinrichtung in Ruhestellung zurückgeführt wird.

9. Station nach einem der Ansprüche 1 bis 8, **dadurch gekennzeichnet, dass** sie ferner Mittel (140) umfasst, um zu überprüfen, ob die ausgewählte Vertiefung richtig geöffnet wurde.

10. Station nach einem der Ansprüche 1 bis 9, **dadurch gekennzeichnet, dass** sie ferner einen lonisator (150) umfasst, um die ausgewählte Vertiefung nach ihrem Öffnen zu ionisieren.

11. Anlage zur Analyse von biologischen Proben, umfassend eine Station zum Folienabziehen (100) nach einem der Ansprüche 1 bis 10, die dazu bestimmt ist, die Folie von Gelkarten (10), die Vertiefungen (14) mit Reagenzien umfassen, abzuziehen.

12. Verfahren zum Folienabziehen von einem Behälter, umfassend einen Körper, in dem mehrere anfänglich durch eine Folie versiegelte aneinandergrenzende Vertiefungen ausgebildet sind, bei dem:
- mindestens ein Einschnitt in der Folie zwischen zwei aneinandergrenzenden Vertiefungen hergestellt wird, um mindestens einen Folienabschnitt zu bilden, der mindestens eine der Vertiefungen des Behälters, die ausgewählte Vertiefung, verschließt,
- der Folienabschnitt erwärmt wird, um ihn vom Körper zu lösen,
- der Folienabschnitt abgezogen wird, um ihn vom Körper zu entfernen, wodurch die ausgewählte Vertiefung geöffnet wird.

13. Verfahren nach Anspruch 12, bei dem:
- mehrere Folienabschnitte in der Folie ausgebildet werden, wobei die Folienabschnitte gewisse der Vertiefungen, die ausgewählten Vertiefungen, verschließen,
- die Folienabschnitte erwärmt werden, um sie vom Körper zu lösen,
- die Folienabschnitte abgezogen werden, um sie vom Körper zu entfernen, wodurch die ausgewählten Vertiefungen geöffnet werden.

14. Verfahren nach Anspruch 12 oder 13, bei dem die ausgewählten Vertiefungen ionisiert werden, nachdem sie geöffnet wurden.

15. Verfahren nach einem der Ansprüche 12 bis 14, bei dem kontrolliert wird, ob die Vertiefungen richtig geöffnet werden.

## Claims

1. A station (100) for uncovering a receptacle (10) including a body (12) in which several adjacent holes (14) initially sealed by a cover (18) are formed, **characterized in that** it includes:
- at least one cutting member (112) for making at least one cut in the cover between two adjacent holes, so as to form at least one cover portion (120₁, 120₂, 120₃, 120₄, 120₅, 120₆) covering at least one of the holes of the receptacle, being a selected hole;
- at least one heating gripping device (130, 130₁, 130₂, 130₃, 130₄, 130₅, 130₆) that is arranged to heat and remove said cover, thereby opening the selected hole.

2. The station according to claim 1, **characterized in that** it includes a plurality of cutting members (112), each of the cutting members being able to produce a cut in the cover between two adjacent holes so as to form one or more cover portions (1201, 1202, 1203, 1204, 1205, 1206) covering one or more holes.

3. The station according to claim 1 or 2, **characterized in that** it includes a plurality of gripping devices (130, 1301, 1302, 1303, 1304, 1305, 1306) that can be moved independently of one another, each of the gripping devices having an idle position in which said gripping device is heated by a heating device (160), and a working position in which the heated gripping device is brought to bear against the or one of the cover portion(s) (1201, 1202, 1203, 1204, 1205, 1206).

4. The station according to claim 3, **characterized in that** it further includes a selection mechanism (200) for selecting the gripping device(s) needing to be moved toward the working position, and a movement device (300) for moving said selected gripping device(s) toward the working position.

5. The station according to claim 4, **characterized in that** the movement device (300) includes a plate (302), each gripping device is fastened to the plate using a spring (304) designed to exert a pressure force on the gripping device (130, 1301, 1302, 1303, 1304, 1305, 1306) oriented toward the body of the receptacle, and the selection mechanism is arranged to prevent the movement of the gripping devices that are not selected.

6. The station according to any one of claims 3 to 5, **characterized in that** the heating device (160) includes a fixed heating baseplate and **in that**, in the idle position, each gripping device (130, 1301, 1302, 1303, 1304, 1305, 1306) is in contact with said heating baseplate.

7. The station according to any one of claims 3 to 6, **characterized in that** each gripping device comprises means (134) for gripping one of the cover portions, and the station furthermore includes at least one discharge member (132) for expelling said cover portion gripped by the gripping device.

8. The station according to claim 7, **characterized in that** the discharge member includes a rod (132) around which the gripping device slides, said rod being arranged to expel the cover portion when the gripping device is returned to the idle position.

9. The station according to any one of claims 1 to 8, **characterized in that** it further includes means (140) for verifying whether the selected hole has been correctly opened.

10. The station according to any one of claims 1 to 9, **characterized in that** it further includes an ionizer (150) to ionize the selected hole(s) after opening thereof.

11. A biological sample analysis installation including an uncovering station (100) according to any one of claims 1 to 10 designed to uncover gel cards (10) including reagent holes (14).

12. A method for uncovering a receptacle including a body in which several adjacent holes initially sealed by a cover are formed, in which:
- at least one cut is made in the cover between two adjacent holes so as to form at least one cover portion covering at least one of said holes, being a selected hole;
- the cover portion is heated so as to be unglued from the body;
- the cover portion is removed from the body, the selected hole being thereby opened.

13. The method according to claim 12, wherein:
- several cover portions are formed in the cover, said cover portions covering some of the holes, being the selected holes,
- said cover portions are heated so as to unglue them from the body,
- said cover portions are removed from the body, the selected holes being thereby opened.

14. The method according to claim 12 or 13, wherein the selected holes are ionized after being opened.

15. The method according to any one of claims 12 to 14, wherein it is verified that the selected holes have been correctly opened.
